# EUROPÄISCHE PATENTANMELDUNG

(11) **EP 1 043 513 A2**
(43) Veröffentlichungstag der Anmeldung: **11.10.2000**
(21) Anmeldenummer: 99112378.7
(22) Anmeldetag: 29.06.1999
(51) Int. Cl.: F16D 65/16

(54) **Kolbeneinheit**

(30) Priorität: 08.04.1999 DE 19915736
(71) Anmelder: HEINRICH BAUMGARTEN KG SPEZIALFABRIK FÜR BESCHLAGTEILE, 57290 Neunkirchen (DE)
(72) Erfinder: Fischbach, Wolfgang, 57567 Daaden (DE)
(74) Vertreter: Missling, Arne, Dipl.-Ing.

(57) **Zusammenfassung**

Eine Kolbeneinheit (1), insbesondere eine Bremskolbeneinheit, die für die mechanische und die hydraulische Beaufschlagung ausgelegt ist, weist einen Außenkolben (2) mit einer zylindrischen Bohrung (3) auf. In diese Bohrung (3) ist ein Innenkolben (4) verschiebbar eingesetzt. Mit dem Innenkolben (4) ist einerseits eine Kolbenstange (5) verbunden, und andererseits ist der Innenkolben (4) über eine Konuskupplung mit dem Außenkolben (2) verbunden. Eine derartige Kolbeneinheit (1) soll nun so ausgestaltet werden, dass die Kolbeneinheit (1) besser für eine gleichzeitige mechanische und hydraulische Beaufschlagung geeignet ist und dass dann die Kolbeneinheit (1) insbesondere auch aus Kunststoff gefertigt werden kann. Dazu weist der Innenkolben (4) eine konusförmige Ausnehmung (8) auf, während in der Bohrung (3) des Außenkolbens (2) ein an die konusförmige Ausnehmung (8) angepasster Konus (7) angeformt ist, welcher mit der konusförmigen Ausnehmung (8) die Konuskupplung bildet.

## Beschreibung

Die Erfindung betrifft eine Kolbeneinheit für mechanische und hydraulische Beaufschlagung, insbesondere Bremskolbeneinheit, mit einem Außenkolben mit einer Bohrung für einen Innenkolben, der im Aussenkolben verschiebbar eingesetzt ist, und mit einer Kolbenstange, welche mit dem Innenkolben verbunden ist, wobei Außenkolben und Innenkolben über eine Konuskupplung verbunden sind.

Eine derartige Kolbeneinheit ist, wenn sie als Bremskolbeneinheit ausgestaltet ist, dafür geeignet, Bremsbacken gegen Bremsscheiben der Bremsen eines Kraftfahrzeuges zu drücken. Da die Bremskolbeneinheit sowohl für mechanische als auch hydraulische Betätigung vorgesehen ist, kann einerseits mit einer mit der Hand oder mit dem Fuß betätigbaren Feststellbremse und andererseits mit der hydraulisch wirkenden Betriebsbremse gebremst werden.

Aus der DE 196 04 402 A1 ist eine solche Kolbeneinheit bekannt. Die Konuskupplung zwischen dem Innen- und dem Außenzylinder wird durch eine reibschlüssige Verbindung einer konusförmigen Ausnehmung an dem Außenkolben einerseits und einem Konus an dem Innenkolben andererseits gebildet.

Bei Betätigung der Betriebsbremse drückt die Hydraulikflüssigkeit gegen den Außenkolben, so dass dieser aus dem Bremszylinder herauswandert und die Bremsbacke gegen die Bremsscheibe drückt. Bei Betätigung der Feststellbremse hingegen drückt die Kolbenstange den Innenkolben gegen den Außenkolben, so dass dieser wiederum aus dem Zylinder herausgeschoben wird und die Bremsbacke gegen die Bremsscheibe drückt.

Probleme können bei einer gleichzeitigen Betätigung der Betriebsbremse und der Feststellbremse auftreten. Beim Betätigen der Betriebsbremse drückt die Hydraulikflüssigkeit nicht nur den Außenkolben aus dem Zylinder heraus, sondern sie drückt auch radial nach außen gegen die Seitenwand des Außenkolbens. Beim Betätigen der Feststellbremse drückt die Kolbenstange über den Innenkolben und die Konuskupplung auf den Außenkolben. Dabei wirken in der Konuskupplung Kraftkomponenten, sowohl in achsialer als auch in radialer Richtung, des Außenkolbens. In Folge der an dem Außenkolben vorgesehenen konusförmigen Ausnehmung ist die radiale Kraftkomponente dabei ebenfalls nach außen gerichtet. Da die konusförmige Ausnehmung des Außenkolbens ein Teil der Seitenwand des Außenkolbens ist, wirkt auch hier die radiale Kraft nach außen auf die Seitenwand. Die beim Bremsen mit der Feststell- und der Betriebsbremse gleichgerichtet wirkenden Kräfte führen bei gleichzeitiger Betätigung der Bremsen zu einer hohen Beanspruchung des Materials des Außenkolbens. Es kann hier die Gefahr von Ermüdungsbrüchen oder anderen Schäden bestehen.

Aus dem Stand der Technik sind weiter Kolben, insbesondere Bremskolben bekannt, die aus Kunststoff gefertigt werden. Aus Kunststoff gefertigte Bremskolben haben den Vorteil, dass sie in der Herstellung billiger und auch leichter sind, was zu einer Reduzierung des Fahrzeuggewichtes führt. Kolbeneinheiten der eingangs genannten Art konnten bisher nicht aus Kunststoff gefertigt werden, da es aufgrund der gleichgerichteten Kräfte bei gleichzeitigem Bremsen mit der Betriebs- und der Feststellbremse zu Rissen und Brüchen in dem Außenkolben kommen kann.

Der Erfindung liegt daher die Aufgabe zugrunde, eine Kolbeneinheit der eingangs genannten Art derart zu gestalten, dass eine gleichzeitige hydraulische und mechanische Beaufschlagung der Kolbeneinheit möglich ist, ohne dass dies zu einer übermäßigen Beanspruchung der Seitenwand des Außenkolbens führt und die Kolbeneinheit insbesondere aus Kunststoff fertigbar ist.

Diese Aufgabe wird erfindungsgemäß dadurch gelöst, dass der Innenkolben auf der der Kolbenstange abgewandten Seite eine konusförmige Ausnehmung aufweist, und dass am Boden der Bohrung des Außenkolbens ein der konusförmigen Ausnehmung angepasster Konus angeformt ist, welche die Konuskupplung bilden.

Bei der erfindungsgemäßen Ausgestaltung der Konuskupplung wirkt nun die radiale Kraftkomponente, die bei der Betätigung der Feststellbremse entsteht, nach innen. Dieses führt bei einer gleichzeitigen Betätigung der Betriebs- und der Feststellbremse dazu, dass sich die radialen Kräfte, die auf den Außenkolben wirken, zum Teil aufheben. Dadurch wird eine Überbeanspruchung des Außenkolbens vermieden, so dass der Außenkolben weniger massiv und/oder auch aus Kunststoff gefertigt werden kann.

Gemäß der Erfindung kann der Konus des Außenkolbens mit einer zentralen Bohrung versehen sein. Vorteilhaft ist dann zentral in der konusförmigen Ausnehmung ein Ansatz vorgesehen, welcher in die zentrale Ausnehmung eingreift.

Erfindungsgemäß kann der Innenkolben in dem Außenkolben drehbar sein und eine in Verschieberichtung liegende Gewindebohrung aufweisen, wobei diese Gewindebohrung mit einem nicht selbsthemmenden Innengewinde versehen ist. Die Kolbenstange ist dann eine Gewindestange, die in einen Teil der Gewindebohrung des Innenkolbens eingeschraubt ist.

In einer vorteilhaften Ausführung der Kolbeneinheit ist in dem Außenkolben ein Anschlag vorgesehen. An diesem Anschlag liegt ein Federelement an, welches den Innenkolben in Richtung des Bodens der Bohrung des Außenkolbens beaufschlagt. Vorteilhaft kann dieses Federelement eine Druckfeder sein. Gemäß der Erfindung kann dann die Seitenwand der Bohrung des Außenkolbens im Bereich des bodenfernen Endes eine umlaufende Nut aufweisen. In diese umlaufende Nut ist dann ein Sprengring eingesetzt, welcher als Anschlag dient. Gleichzeitig wirkt die Druckfeder innenkolbenseitig auf eine Ringscheibe, welche über ein Drehlager mit dem Innenkolben verbunden ist.

Erfindungsgemäß wird somit nicht nur Material und damit Gewicht eingespart, sondern sowohl der Außenkolben als auch der Innenkolben können anstelle aus Metall auch aus einem Kunststoff, insbesondere aus einem Duroplast gefertigt sein.

Zwei Ausführungsbeispiele sind anhand der Zeichnung näher beschrieben. Darin zeigt
- Fig. 1: eine erste erfindungsgemäße Kolbeneinheit und
- Fig. 2: eine zweite erfindungsgemäße Kolbeneinheit.

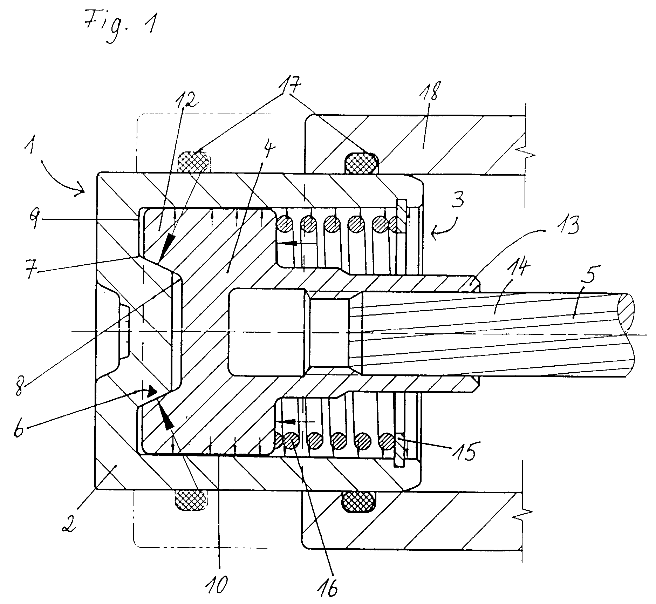

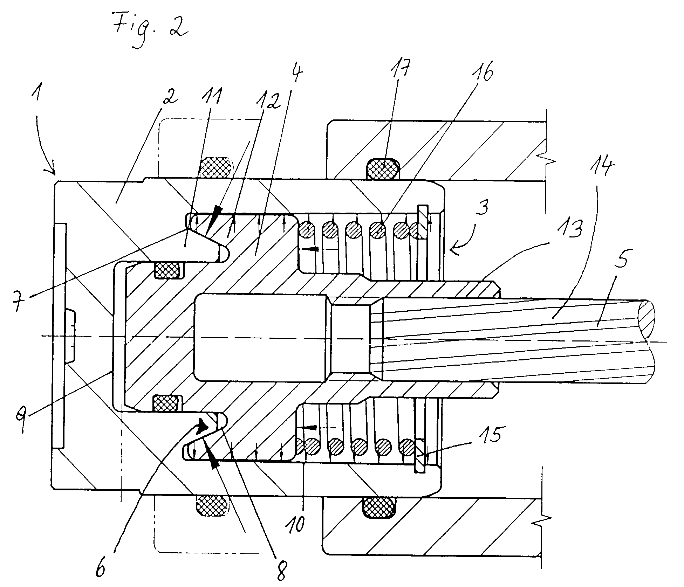

Die in den Fig. 1 und 2 dargestellten Kolbeneinheiten 1 sind in einem zum Teil dargestellten Zylinder 18 eingesetzt. Die Kolbeneinheiten 1 können sowohl mechanisch als auch hydraulisch beaufschlagt werden. Die dazu notwendigen hydraulischen bzw. mechanischen Einrichtungen sind nicht dargestellt. Das dargestellte Ende des Zylinders 18 ist ein zylindrischer Stutzen, in den der Außenkolben 2 eingesetzt ist. Der Außenkolben 2 ragt dabei aus dem offenen Ende des Zylinders 18 heraus. In der Innenwandung des Zylinders 18 ist eine umlaufende Nut vorgesehen, in die eine Dichtung 17 eingelegt ist. Diese Dichtung 17 dichtet den Innenraum des Zylinders 18 und des Außenkolbens 2 gegen die äußere Umgebung ab. Der zylindrische Außenkolben 2 weist eine Bohrung 3 auf. Dadurch erhält der Außenkolben 2 die Form eines Topfes, wobei die Öffnung des Topfes in Richtung Innenraum des Druckzylinders 18 zeigt. Im Zentrum des Bodens des den Außenkolben 2 bildenden Topfes erhebt sich eine kreisförmige Fläche (Fig. 1), deren äußere Berandung einen Konus 7 bildet. Am Ende der Seitenwand des Außenkolbens 2 ist innen eine umlaufende Nut vorgesehen, in welche ein Sprengring 15 eingesetzt ist. An dem Sprengring 15 liegt eine Druckfeder 16 an, welche andererseits einen Innenkolben 4 beaufschlagt. Dieser Innenkolben 4 ist in dem Außenkolben sowohl achsial beweglich als auch drehbar gelagert. An der dem Boden des Außenkolbens 2 zugewandten Seite des Innenkolbens 4 weist der Innenkolben 4 eine konusförmige Ausnehmung 8 auf, die mit dem Konus 7 des Außenkolbens 2 korrespondiert. Weiter weist der Innenkolben 4 eine Gewindebohrung 13 auf. In diese Gewindebohrung 13 ist eine mit einem nicht selbsthemmenden Gewinde 14 versehene Kolbenstange 5 eingeschraubt. Diese Kolbenstange 5 ist drehfest mit der mechanischen Betätigungseinrichtung der Kolbeneinheit 1 verbunden und lässt sich somit bei Betätigung dieser mechanischen Betätigungseinheit in achsialer Richtung verschieben.

Im Unterschied zur Kolbeneinheit 1 nach Fig. 1 ist bei der Kolbeneinheit 1 gemäß Fig. 2 in dem Konus 7 eine zentrale Ausnehmung 11 vorgesehen. Dementsprechend weist der Innenzylinder zentral in der konusförmigen Ausnehmung 8 einen Ansatz auf, der in die Ausnehmung 11 des Konus 7 eingreift.

Sowohl in Fig. 1 als auch in Fig. 2 ist der Druckzylinder 18 in zwei verschiedenen Stellungen zum Außenkolben 2 dargestellt. Damit soll die Verschiebbarkeit des Außenkolbens 2 in dem Zylinder 18 angedeutet werden. Die beiden dargestellten Stellungen entsprechen nicht notwendigerweise der Stellung der Kolbeneinheiten 1 ohne bzw. mit Beaufschlagung.

Die Verbindung des Innenkolbens 4 über das nicht selbsthemmende Gewinde mit der Kolbenstange 5 einerseits und über die Konuskupplung 7, 8 mit dem Außenkolben 2 andererseits dient der automatischen Nachstellung der Kolbeneinheit, wie sie z.B. beim Verschleiß von Bremsbelägen notwendig ist. Diese automatische Nachstellung ist ausführlich in der DE 41 21 054 A1 beschreiben, so dass hier auf weitere Einzelheiten verzichtet wird.

Im Folgenden sei die hydraulische und anschließend die mechanische Betätigung der Kolbeneinheit 1 für die Verwendung als Bremskolbeneinheit näher erläutert.

Durch Betätigung der mechanischen Betätigungseinrichtung wird die Kolbenstange 5 in Richtung Außenkolben 2 verschoben. Da das Gewinde 14 zwischen dem Innenkolben 4 und der Kolbenstange 5 ein nicht selbsthemmendes Gewinde ist und der Innenkolben drehbar in dem Außenkolben 2 gelagert ist, müsste sich dabei der Innenkolben 4 so verdrehen, dass sich dieser gewissermaßen auf die Kolbenstange 5 aufschraubt. Tatsächlich ist der Innenkolben 4 jedoch nicht frei drehbar, da die Druckfeder 16 den Innenkolben 4 mit der konusförmigen Ausnehmung gegen den Konus 7 des Außenkolbens 2 drückt. Die konusförmige Ausnehmung 8 und der Konus 7 bilden dabei eine Konuskupplung. Die Konuskupplung ist dabei so ausgelegt, dass sie Drehmomente zwischen dem Innenkolben 4 und dem Außenkolben 2 übertragen kann. Dadurch verhindert die Konuskupplung 7, 8 das Drehen des Innenkolbens 4, und ein Einschrauben der Kolbenstange 5 in den Innenkolben 4 wird verhindert. Die achsiale Bewegung der Kolbenstange wird dadurch über den Innenkolben auf den Außenkolben übertragen, wodurch der Außenkolben aus dem Zylinder 18 herausgedrückt wird.

Bei einer hydraulischen Beaufschlagung der Kolbeneinheit 1 drückt die Hydraulikflüssigkeit von innen gegen die Seitenwand und den Boden des Außenkolbens 2. Der Druck der Hydraulikflüssigkeit gegen den Boden des Außenkolbens 2 bewirkt dabei das Herausdrücken der Kolbeneinheit aus dem Zylinder 18.

Die in den Fig. 1 und 2 dargestellten Kolbeneinheiten 1 sind vorzugsweise als Bremskolbeneinheiten vorgesehen. Bei solchen Bremskolbeneinheiten sind jeweils nur äußerst geringe Verstellwege der Kolben 2, 4 erforderlich. Zum Lösen der Bremsen müssen natürlich die Kolben 2, 4 um die Verstellwege (abzüglich der Abnutzung der Bremsbacken) zurück in die Ausgangsposition verfahren werden. Die dazu notwendigen, äußerst geringen Rückstellkräfte werden durch die Dichtung 17 aufgebracht, die beim Bremsen gespannt wird, sich beim Lösen der Bremse entspannt und dadurch die Kolben 2, 4 zurückbewegt.

Die Seitenwände des Außenkolbens 2 werden somit bei einer mechanischen Beaufschlagung der Kolbeneinheit nur mittelbar über die Verbindung des Bundes mit der Seitenwand beaufschlagt. Diese von der mechanischen Betätigungseinrichtung eingeleiteten Kräfte wirken jedoch ausschließlich radial nach innen auf den Konus 7 des Außenkolbens und somit auch nur radial nach innen auf die Seitenwand. Diese radial nach innen wirkenden Kräfte gleichen sich bei einer gleichzeitigen hydraulischen Beaufschlagung zumindest teilweise mit den radial nach außen wirkenden Hydraulikkräften auf die Seitenwand des Außenkolbens 2 aus. Die Seitenwand des Außenkolbens 2 wird folglich wesentlich weniger beansprucht, als es bei einer Kolbeneinheit nach dem Stand der Technik der Fall ist. Folglich kann die Seitenwand weniger massiv ausgeführt werden, und die Kolbeneinheit ist auch insbesondere für eine Fertigung aus Kunststoffen geeignet.

### Bezugszeichenliste

- 1 -: Kolbeneinheit
- 2 -: Außenkolben
- 3 -: Bohrung
- 4 -: Innenkolben
- 5 -: Kolbenstange
- 6 -: Konuskupplung
- 7 -: Konus
- 8 -: konusförmige Ausnehmung
- 9 -: Boden der Bohrung
- 10 -: Seitenwand der Bohrung
- 11 -: zentrale Ausnehmung
- 12 -: zentraler Ansatz
- 13 -: Gewindebohrung
- 14 -: nicht selbsthemmendes Gewinde
- 15 -: Anschlag, Sprengring
- 16 -: Druckfeder
- 17 -: Dichtung
- 18 -: Zylinder

## Patentansprüche

1. Kolbeneinheit für mechanische und hydraulische Beaufschlagung, insbesondere Bremskolbeneinheit, mit einem Außenkolben mit einer Bohrung für einen Innenkolben, der im Aussenkolben verschiebbar eingesetzt ist, und mit einer Kolbenstange, welche mit dem Innenkolben verbunden ist, wobei Außenkolben und Innenkolben über eine Konuskupplung verbunden sind,
dadurch gekennzeichnet, dass
der Innenkolben (4) auf der der Kolbenstange abgewandten Seite eine konusförmige Ausnehmung (8) aufweist, und dass am Boden der Bohrung (3) des Außenkolbens (2) ein der konusförmigen Ausnehmung (8) angepasster Konus (7) angeformt ist, wobei die konusförmige Ausnehmung (8) und der Konus (7) die Konuskupplung bilden.

2. Kolbeneinheit nach Anspruch 1, dadurch gekennzeichnet, dass der Konus (7) eine zentrale Ausnehmung (11) aufweist.

3. Kolbeneinheit nach Anspruch 2, dadurch gekennzeichnet, dass der Innenkolben (4) in der konusförmigen Ausnehmung (8) einen zentralen Ansatz (12) aufweist, welcher in die zentrale Ausnehmung des Außenkolbens eingreift.

4. Kolbeneinheit nach einem der Ansprüche 1 bis 3, dadurch gekennzeichnet, dass der Innenkolben (4) eine sich in Verschieberichtung erstreckende Gewindebohrung (13) aufweist, dass diese Gewindebohrung (13) mit einem nicht selbsthemmenden Innengewinde (14) versehen ist und dass die Kolbenstange (5) eine Gewindestange ist, welche in die Gewindebohrung (13) des Innenkolbens eingeschraubt ist.

5. Kolbeneinheit nach einem der Ansprüche 1 bis 4, dadurch gekennzeichnet, dass in der Bohrung (3) des Außenkolbens (2) ein Anschlag (15) vorgesehen ist, und dass an diesem Anschlag (15) ein Federelement (16) anliegt, welches den Innenkolben (4) in Richtung des Bodens (9) der Bohrung (13) beaufschlagt.

6. Kolbeneinheit nach Anspruch 5, dadurch gekennzeichnet, dass das Federelement eine Druckfeder (16) ist.

7. Kolbeneinheit nach Anspruch 6, dadurch gekennzeichnet, dass die Seitenwand der Bohrung (3) des Aussenkolbens (2) im Bereich des bodenfernen Endes eine umlaufende Nut aufweist, in die ein Sprengring (15) als Anschlag eingesetzt ist, und dass die Druckfeder (16) innenkolbenseitig auf eine Ringscheibe wirkt, welche über ein Drehlager mit dem Innenkolben (4) verbunden ist.

8. Kolbeneinheit nach einem der Ansprüche 1 bis 7, dadurch gekennzeichnet, dass sowohl der Aussenkolben (2) als auch der Innenkolben (4) aus einem Kunststoff, insbesondere aus einem Duroplast, gefertigt sind.
